# DEMANDE DE BREVET EUROPEEN

(11) **EP 0 847 814 A1**
(43) Date de publication de la demande: **17.06.1998**
(21) Numéro de dépôt: 96480108.8
(22) Date de dépôt: 12.12.1996
(51) Int. Cl.: B09C 1/06, B09C 1/08, C10B 53/00

(54) **Procédé et dispositif de réhabilitation de matières et sols pollués en continu par pyrolyse sous atmosphère controlée**

(71) Demandeur: Minghi, Osvald M., 30133 Les Angles (FR); Froidefond, Jacques, 13480 Cabries (FR); Chaplot, Guy, 06530 Peymeinade (FR)
(72) Inventeur: Minghi, Osvald M., 30133 Les Angles (FR); Froidefond, Jacques, 13480 Cabries (FR); Chaplot, Guy, 06530 Peymeinade (FR)
(74) Mandataire: Hammond, William

(57) **Abrégé**

Le secteur technique de l'invention est le domaine de la réalisation d'équipements de régénération de sols pollués par voie thermique in-situ.

Le dispositif réhabilitation de matières et sols suivant l'invention comprend au moins un réacteur (20) comportant au moins deux vis (7) de malaxage corotatives, enfermé dans une enceinte étanche (25) et divisé en autant de compartiments successifs (1, 2, 3, 4, 5...) que d'étapes du procédé de traitement, disposés en continu les uns derrière les autres dans l'ordre desdites étapes et traversés par les vis de malaxage (7) ; au moins une introduction étanche (10, 21) des produits à traiter (6) et des additifs de stabilisation des métaux lourds (9) dans le premier compartiment (1); des moyens (11, 12, 13, 14, 15...) de mise sous vide de chacun des compartiments du réacteur (20) ; au moins un moyen de chauffage (17) du troisième compartiment où est réalisée une pyrolyse (3) des produits à traiter entre 200°C et 800°C.

## Description

La présente invention a pour objet un procédé et dispositif de réhabilitation de matières et sols pollués en continu par pyrolyse sous atmosphère contrôlée, comprenant au moins une première étape de malaxage de ceux-ci avec des additifs dont au moins de la chaux, une deuxième étape de séchage du mélange, une troisième étape de décomposition des produits de ce mélange par chauffage à haute température et une quatrième étape de traitement complémentaire en fonction de la nature des produits à traiter initiaux et du produit fini désiré.

Le secteur technique de l'invention est le domaine de la réalisation d'équipements de régénération de sols pollués par voie thermique in-situ ou dans un centre spécialisé.

Une des applications principales de l'invention est le traitement de sols pollués mais d'autres applications sont possibles pour d'autres types de matières à régénérer, telles que des boues et des sables industriels ou des explosifs, pour transformer celles-ci, sans pollution dispersée, en matière non polluante ou réutilisable à un coût de traitement économique par rapport aux procédés existants, la dépense d'énergie et la pollution résiduelle selon le procédé décrit sont fortement réduites en fonctionnement continu sous pression réduite.

Les sites industriels pollués sont des sites sur lesquels existe une pollution d'origine industrielle du sol ou du sous-sol susceptible de provoquer une nuisance ou un risque pour les personnes ou l'environnement. cette pollution peut provenir aussi bien de déchets déposés dans des conditions de sécurité insuffisantes pour l'environnement, que du déversement, accidentel ou non, de produits chimiques susceptibles de nuire à l'environnement ou à la santé.

La présence d'une telle pollution peut avoir un impact sur les eaux souterraines ou de surface et présenter un risque pour certains usages du sol par l'homme.

Parmi ces sites pollués, on distingue des décharges et stockages permanents de déchets (crassiers, terrils, lagunes, etc...) à l'origine de la pollution des eaux, des dépôts de déchets ou de produits abandonnés, occasionnés par des faillites d'entreprises ou des pratiques frauduleuses d'élimination, des sols pollués par des retombées, des infiltrations ou des déversements de substances polluantes liés à l'activité d'une installation industrielle ou à un accident de transport, des sites industriels, abandonnés ou en activité, à pollutions multiples.

De nombreux procédés et équipements ont été décrits qui proposent de traiter les sols pollués qui, d'une part, dégradent l'environnement sur de grandes surfaces, et ceci souvent en zone urbaine, d'autre part, constituent des sources indirectes de pollution importante, et enfin représentent des coûts de réhabilitation très lourds pour les institutions publiques ou les industriels concernés. En effet, tant par la volonté politique que la demande des populations et à la prise de conscience de tous, les pays industrialisés sont contraints de protéger de plus en plus leur environnement et imposent la réhabilitation de ces sites. Ce traitement représente cependant un investissement important qui peut être supérieur à la valorisation financière du site, et ceci même en milieu urbain.

Pour cela, différentes filières ont été explorées et ont permis l'étude et le développement de divers types de procédés et équipements, basés sur la dégradation biologique, le lavage ou l'incinération, par décapage avec élimination hors site des déchets ou par par traitement sur place des sols et des eaux ou encore en réalisant un confinement et en laissant les déchets confinés sur le site en en reportant le traitement ultérieurement, ce qui constitue une majoration importante du coût définitif.

Ces technologies sont en général coûteuses en investissement et complexes à l'utilisation, donc coûteuses à l'exploitation, ce qui freine les décisions de réhabilitation, non seulement pour le retour à des activités immobilières, mais aussi pour le retour à des activités économiques (industrielles ou agricoles), et qui conduit souvent à des solutions intermédiaires de confinement.

Pour résoudre ce problème, l'invention présente les caractéristiques d'une installation fixe ou mobilepour éliminer la pollution et permettre la réutilisation des sols. Cette opération comprend une phase préalable d'analyse et d'identification de la nature du ou des polluants.

C'est ainsi qu'il existe aujourd'hui plusieurs procédés de traitement de sols pollués dont la majorité est spécifique à une catégorie de sol (perméable, argileux, siliceux, calcaire...), ou à une catégorie de polluant (polluants organiques ou inorganiques, furanes, PCB, engrais, pesticides, hydrocarbures, DIS, poudres, explosifs, métaux lourds...).

Les techniques utilisées sont donc peu exploitables industriellement. C'est le cas de :
- l'extraction des polluants organiques par des solvants ;
- l'injection dans les sols de produits imperméabilisants pour un assainissement in-situ des zones contaminées ;
- l'électro-osmose par application d'une tension électrique au moyen d'électrodes au molybdème implantées dans le sol ;
- certains procédés qui traitent ce problème de pollution par ajout de composants actifs ou basiques à forte concentration et dont le coût est prohibitif (acide citrique, acide phosphorique, chlorure d'ammonium...) ;
- d'autres procédés qui s'apparentent à la dilution de polluants par ajout de matières réactives ou neutres telles que sable, ciment, agrégats, liants hydrauliques, de telle manière que le pourcentage massique des polluants diminue artificiellement et devienne conforme à la législation.

La décomposition de polluants organiques par thermolyse ou pyrolyse des déchets a fait l'objet de nombreux brevets récents, car il s'agit d'un développement nouveau et prometteur dans lequel se situe du reste la présente invention et dont les plus significatifs sont la demande FR 2 679 009 de l'IFP et de la CGC ENTREPRISE intitulée "Procédé et dispositif de traitement de déchets par contact direct" comprenant une étape de séchage, une étape de thermolyse par contact avec des gaz chauds à faible teneur en oxygène et une étape de déchloration par lavage; ou encore, dans les demandes FR 2 671 990 et FR 2 674 149 de Monsieur CHAUSSONNET, il est décrit un "système pour le traitement par thermolyse sous vide de produits (liquides ou gazeux pour la première demande et solides pour la deuxième), dont le rejet est préjudiciable pour l'environnement" : le vide permet une absence d'oxygène empêchant certaines réactions chimiques d'oxydation mais le système décrit nécessite une grosse chambre de réaction et de l'apport d'énergie assez important, et ne permet pas de traiter simultanément des déchets d'origine différente, les transferts thermiques étant difficiles à maîtriser dans le vide compte tenu de l'installation décrite.

Bien qu'incomplets ces procédés peuvent être adaptés au traitement des sols pollués. Les améliorations, qui font l'objet de la présente invention portent notamment sur la compacité du matériel qui permet la mobilité du dispositif et sur les caractéristiques du traitement qui permet d'inhiber la pollution due à la présence de métaux lourds.

Il existe cependant des procédés innovants et adaptés à un traitement sur site qui sont aussi basés sur la destruction thermique des polluants, tels que :
- le procédé AOSTRA TACIUK de la société UMATAC Industrial Process (Calgary - USA) qui utilise la technique de la pyrolyse, mais qui n'offre pas la possibilité de traiter les métaux lourds qui restent présents et concentrés dans les résidus carbonés oxydés ;
- le procédé ReTec's BDAT de la société Remediation Technologie Inc cité au congrès de l'AWMA de juin 91 et qui consiste en une série de procédés pour la séparation sélective de fractions aqueuses, organiques et solides des produits traités et qui utilise une technique de pressage des matériaux pour leur sèchage dans un dispositif de bi-vis corotatives, puis qui effectue ensuite leur pyrolyse. Ce procédé, pas plus que le précédent ne traite le problème des métaux lourds présents dans les produits à traiter et qui constituent une source de pollution aussi grâve que les hydrocarbures ou les PCB.

L'invention concerne les caractéristiques d'un procédé de décontamination par pyrolyse sous atmosphère contrôlée adapté à la réhabilitation des sols pollués particulièrement intéressant par sa faible consommation d'énergie et de réactifs.

La présente invention constitue ainsi une amélioration et une innovation par rapport à l'ensemble des techniques existantes. Selon le procédé, le matériau à dépolluer est traité en continu en une phase unique à l'intérieur d'un réacteur prévu à cet effet, lequel réacteur effectue successsivement le broyage et le sèchage des produits traités, puis la pyrolyse des polluants, tout en inertant les métaux lourds.

De plus, un autre objectif de l'invention est de ne rien rejeter dans la nature qui soit polluant, tant sous forme de gaz que de résidus solides, que ce soit lors du traitement des sols lui-même, que lors de l'utilisation des sols ainsi obtenus, en particulier en ce qui concerne la séquestration des métaux lourds, pour que toute pollution ultérieure par l'usage des sols soit écartée; ceci pouvant être vérifié par l'analyse des eaux de lixiviation des produits obtenus qui est conforme à la réglementation en matière de teneur en métaux lourds.

Une solution au problème posé est un procédé de traitement de sols par pyrolyse, comprenant et ceci lorsqu'il y a présence de métaux lourds, au moins une première étape de malaxage de ceux-ci avec des additifs dont au moins de la chaux et de l'eau afin d'avoir une siccité minimale, une deuxième étape de broyage et de séchage éventuel du mélange, une troisième étape de décomposition des produits de ce mélange par chauffage à haute température et une quatrième étape de traitement complémentaire en fonction de la nature des sols initiaux et du produit fini désiré, dans lequel :
- on réalise l'ensemble des étapes du procédé dans au moins un réacteur comportant au moins deux axes de malaxage corotatifs formant vis d'Archimède et enfermés dans une enceinte telle que par exemple un dispositif bivis comme ceux décrits dans les brevets US 3419250 du 31 décembre 1968 et US 3618902 du 14 novembre 1969 de Monsieur Ambrose K. BRENNAN; lequel réacteur, dans un mode de réalisation préférentiel est divisé en autant de compartiments successifs que d'étapes de procédé, disposés en continu les uns derrière les autres dans l'ordre de celles-ci et de préférence traversés par les mêmes vis ou axes de malaxage. La modularité de ce type de réacteur permet une adaptation rapide de ses caractéristiques techniques en fonstion du traitement à réaliser ;
- on rajoute, lors de la première étape de malaxage initial des produits à traiter, des additifs comprenant, outre de la chaux vive, des oxydes métalliques de telle façon que l'on réalise des molécules cages ou des capteurs de cations métalliques qui piègent et séquestrent ceux qui pourraient être présents dans les sols traités ;
- on utilise l'énergie de réaction du mélange obtenu dans la première étape avec les sols ou les produits pollués et les additifs, et celle mécanique de frottement des vis de malaxage pour sécher, dans la deuxième étape, ledit mélange, le broyage fin réalisé assurant une garantie de partait traitement à coeur des produits à régénérer. On fournit si besoin un appoint thermique par l'intermédiaire du corps de la bi-vis utilisé comme élément chauffant ;
- on effectue la troisième étape de décomposition des produits par pyrolyse avec un chauffage portant la température du compartiment correspondant, entre 250 et 800°C ;
- on effectue l'ensemble des étapes du traitement, sous vide, entre 10 000 et 50 000 Pa de pression absolue.

Lors de la troisième étape du procédé et qui est la pyrolyse, d'une part on décompose les composés organiques sous forme de gaz, d'huile pyrolytique condensable et de gaz combustible, d'autre part on sublime d'autres composés non pyrolysables qui s'évaporent sous vide, l'ensemble de ces gaz étant récupérés par au moins un moyen de mise sous vide du réacteur et à partir duquel on effectue les séparations nécessaires pour récupérer chaque gaz en vue de son utilisation spécifique ; à la fin de cette étape de pyrolyse, on obtient un sol ou un produit dépollué qui peut être refroidit lors d'une quatrième étape du procédé au cours de laquelle se termine la réaction qui a démarré dans l'étape précédente de pyrolyse. A l'issue de la quatrième étape, le sol ou le produit dépollué peut être réutilisé suivant la règlementation en vigueur.

Dans un mode de réalisation spécifique, on effectue une dernière étape de traitement au cours de laquelle on rajoute aux produits résiduels issus de l'étape précédente qui est soit directement celle de pyrolyse, soit celle intermédiaire de refroidissement, des additifs déterminés en fonction du produit fini désiré et de la nature des composés de produits à traiter initiaux.

Dans un mode spécifique de réalisation,. le compartiment de pyrolyse pouvant être un réacteur différent du premier, tel qu'une mono-vis, mais relié par un dispositif étanche de sorte à conserver les caractéristiques de pression telles que décrites ci-avant ;

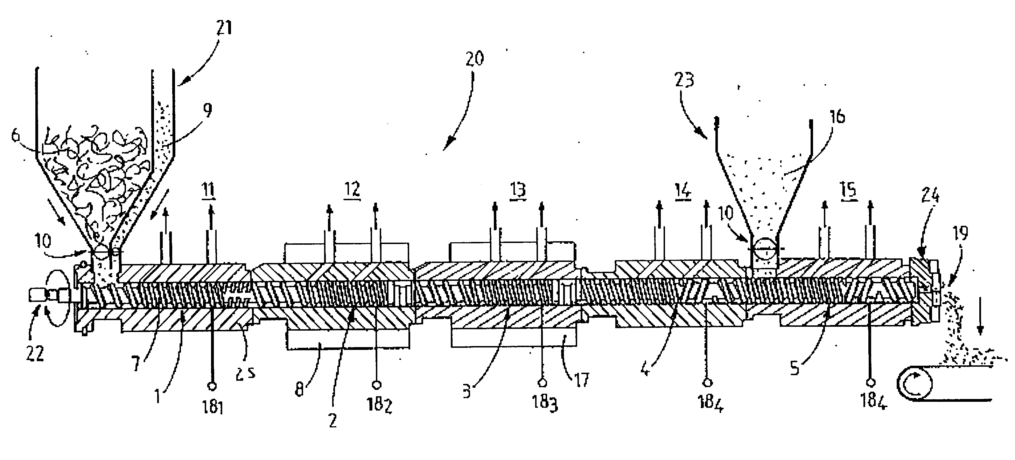

Le résultat est de nouveaux procédés de traitement de sols ou de produits pollués et des dispositifs permettant l'application de tels procédés suivant le descriptif ci-dessous et l'exemple de la figure jointe. En effet, de tels procédés et dispositifs permettent de répondre au problème posé et d'atteindre des objectifs définis précédemment tout en évitant les inconvénients des procédés et dispositifs connus à ce jour. En effet, la simplicité de l'invention permet aisément de placer celle-ci sur une plate-forme mobile et donc d'effectuer indifféremment les différents traitements sur site ou dans un centre spécialisé.

Le bilan énergétique est amélioré de façon significative par l'utilisation de deux vis de malaxage corotatives qui permettent d'effectuer l'ensemble du traitement, de récupérer sous forme d'énergie calorifique les frottements mécaniques de celles-ci pour chauffer et sécher le produit tout en les réduisant en poudre fine, et de mettre aisément sous vide toutes les étapes du procédé.

En effet, en plus de l'avantage ci-dessus, la mise sous vide permet le contrôle et le traitement complet antipollution des gaz et de l'eau issus du procédé, de même que la technologie propre de la présente invention permet d'effectuer l'ensemble des opérations de traitement sans générer de pollution, sans aucun rejet de poussière ou de gaz dans l'atmosphère et les produits traités et régénérés sont réutilisables directement sur le site.

De plus, les dangers de pollution différée par lixiviation de complexes de métaux lourds qui sont responsables à ce jour, de sévères pollutions durables dans le temps sont écartées : en effet, bien que des quantités importantes de métaux lourds soient dispersées à ce jour dans les procédés et dispositifs connus dans les cendres volantes, lors par exemple de l'incinération, il en reste d'importantes proportions dans les mâchefers sous forme d'oxydes métalliques qui sont solubles en phase aqueuse et donc lixiviables. La présente invention met à profit le procédé connu d'insobulisation des métaux lourds dans une molécule cage telle qu'une matrice de silico-aluminate de calcium hydraté, insoluble dans l'eau et chimiquement résistante : grâce à cette étape de procédé incluse dans la présente invention, les métaux lourds ne sont plus solubles en phase aqueuse et les phénomènes de lixiviation n'ont plus pour conséquence la pollution des nappes phréatiques.

Le procédé permet également de modifier chimiquement les métaux lourds en sulfures et polysulfures naturellement non polluants et ceci selon le choix de réactifs appropriés. La présente invention inhibe également la production de tout rejet acide par neutralisation in situ de tous composés acides par l'utilisation de réactifs basiques. Ainsi, l'acide sulfurique est neutralisé sous forme de sulfate alcalin, l'acide chlorhydrique est neutralisé sous forme de chlorure alcalin ou alcalino-terreux, et les acides sulfuriques en sulfates. Le pH final du produit traité est basique, ce qui renforce l'insolubilisation des oxydes ou hydroxydes de métaux lourds.

La présente invention vise ainsi à améliorer les procédés de traitement de sols existants, en permettant en particulier un traitement continu dans un même réacteur, assurant successivement les fonctions de mélange, de séchage, de stabilisation ou transformation de produits entrant, ce qui réduit considérablement les coûts d'installation et de fonctionnement : on regroupe ainsi les différentes étapes de procédé au sein d'une même machine compacte, permettant également d'obtenir le respect optimal des paramètres de traitement spécifiques à chaque type de produits, qui sont stockés sous forme de programme dans la mémoire d'un automate ou d'un micro-ordinateur qui pilote alors l'ensemble du dispositif et qui permet ainsi d'effectuer le traitement adapté à chaque produit sans règlage long et parfois difficile à réaliser sur site ; les paramètres ainsi relevés sont par exemple le profil de la température, la vitesse de traitement, le dosage d'additifs chimiques et/ou de produits complémentaires ainsi que le profil de la pression absolue interne.

Le dispositif suivant l'invention comporte en effet un système d'extraction et de filtration des vapeurs produites, complété par un ou plusieurs condenseurs, et un ou plusieurs systèmes de mise sous vide par pompe, par exemple, à anneau liquide.

Les gaz ainsi récupérés sont traités chimiquement de telle manière qu'il n'y ait pas de rejet acide de type fluorhydrique, sulfureux ou sulfurique dans l'atmosphère, et que les gaz recueillis soient réutilisables sans pollution externe, ni aucun rejet de fumée ou de vapeur.

Un autre avantage de la présente invention est que le procédé de base de celle-ci peut être réalisé dans un réacteur compact, dont les éléments sont transportables d'un site à l'autre sur engin mobile, par exemple. On pourrait citer d'autres avantages de la présente invention, mais ceux cités ci-dessus en montrent déjà suffisamment pour en prouver la nouveauté et l'intérêt. La description et la figure unique ci-après représentent un exemple de réalisation de l'invention, mais n'ont aucun caractère limitatif : d'autres réalisations sont possibles dans le cadre de la portée et de l'étendue de l'invention; en particulier suivant le type de produits traités, on peut ne pas utiliser une des étapes du procédé et ne pas faire fonctionner un des compartiments correspondants du dispositif de la présente invention.

La figure unique ci-jointe est une vue en coupe longitudinale d'un exemple de réacteur permettant de réaliser le procédé de la présente invention.

Préalablement et en amont de celui-ci, les produits à traiter (6) sont broyés par tout moyen connu leur donnant une dimension de granulométrie égale au maximum à la hauteur de filet du premier compartiment (1) des vis de malaxage (7) dudit réacteur (20), tel que par exemple avec un maximum de volume pour chaque grain ou particule de produits à traiter broyés correspondant à un parallélépipède de 50 mm x 50 mm x 20 mm environ, ou doivent se présenter sous forme pâteuse qui peut être du reste la forme sous laquelle ils sont rejetés par l'industrie productrice.

Pour réaliser le procédé précédemment décrit de la présente invention, le dispositif suivant l'invention comprend :
- au moins un réacteur (20) comportant au moins deux axes de malaxage corotatifs formant vis (7) d'Archimède et enfermés dans une enceinte étanche (25), entraînées par tout moyen de mise en rotation (22), à la vitesse et avec le couple voulu et nécessaire et divisé en autant de compartiments successifs (1), (2), (3), (4), (5)... que d'étapes du procédé de traitement, disposés en continu les uns derrière les autres dans l'ordre desdites étapes et traversés par les mêmes axes de malaxage (7) ;
- au moins une capacité étanche (21) alimentée en deux réservoirs indépendants tampons, par intermédiaire par exemple d'écluses rotatives (10) assurant l'étanchéité avec l'atmosphère, et l'introduction suivant les débits respectifs voulus des produits à traiter ( 6) et des additifs (9) dans le premier compartiment (1) ; le dispositif suivant la présente invention permet d'acquérir un débit de 1 à 10 tonnes/heure de produits par réacteur continu (20) ;
- des moyens (11), (12), (13), (14), (15)... de mise sous vide de chacun des compartiments du réacteur (20);
- au moins un moyen de chauffage (17) du troisième compartiment de pyrolyse (3).

La première étape du procédé suivant l'invention, est réalisée dans le compartiment (1), qui est la zone dite de broyage et de malaxage entre les différents produits rentrant que sont les produits à traiter (6) et les additifs liquides et solides (9) assurant la stabilisation, la dépollution et la synthèse des structures moléculaires nécessaires à la séquestration des métaux lourds selon le procédé connu de préparation de molécules cages, à savoir essentiellement de la chaux vive, des oxydes métalliques et de l'eau si la siccité est inférieure à 75 %, dont la transformation chimique et l'hydratation permettent la synthèse. Ces additifs ont également pour fonction secondaire de favoriser le séchage des produits à traiter humides.

La deuxième étape du procédé suivant l'invention est réalisée dans le deuxième compartiment (2) succédant au précédent (1), et qui permet d'obtenir un séchage rapide en combinant une action de pressage favorisant l'extraction des liquides du coeur de la matière, avec un chauffage permettant d'assurer une vaporisation facilitée par la mise sous vide de la zone par tout extracteur (11). Ledit chauffage peut être simplement la récupération de l'énergie de frottement des vis de malaxage (7) et qui est suffisant quand le taux d'humidité des produits à traiter introduits( 6) est inférieur à 30% ; quand ce taux est supérieur, un chauffage d'appoint (8) extérieur est nécessaire, tel que par induction, et permet d'obtenir le résultat souhaité.

Celui-ci qui est le séchage des produits, doit conjuguer deux phénomènes que sont, d'une part l'entraînement de l'eau de l'intérieur des particules humides vers l'extérieur, et d'autre part l'évaporation de cette eau en surface, qui dépend essentiellement des conditions de l'ambiance, telles que l'humidité relative, la température, la pression et la vitesse : l'évaporation est d'autant plus intense que l'humidité relative de l'air est faible et que sa température et sa vitesse sont élevées. En revanche, la circulation de l'eau dans la matière est un phénomène plus difficile à maîtriser et il se produit systématiquement des parties chaudes vers les parties froides et des zones humides vers les zones sèches. Pour améliorer l'entraînement de l'eau vers la périphérie des particules à sécher et où se produit l'évaporation, il est donc nécessaire de porter l'intérieur des particules à sécher à une température plus élevée que celle régnant à leur superficie. Ceci peut être amélioré en diminuant la pression dans l'enceinte, tel que par la réalisation justement du vide partiel par tout moyen (12) permettant de maintenir une pression absolue de 980 à 4 900 Pa dans le compartiment (2) et de préférence 1 470 Pa, ce qui améliore le coefficient de transfert thermique.

La diminution de la pression permet également de réaliser des économies d'énergie en diminuant l'enthalpie de vaporisation, c'est-à-dire la quantité d'énergie nécessaire pour le passage de l'eau de l'état liquide a l'état gazeux, et il est recherché une pression permettant d'obtenir cette vaporisation avec la seule énergie mécanique de broyage et de transport de la matière transformée naturellement en chaleur dans le réacteur par lesdites vis (7) de malaxage.

De plus, la finesse du broyage et éventuellement la qualité du malaxage préalable avec les additifs, grâce à l'utilisation de telles vis (7) de malaxage, surtout quand il s'agit d'une bivis, combinée avec le vide, le pressage et la diminution de température superficielle due à la perte de chaleur sensible provoquée par la vaporisation, permettent d'accélérer considérablement le temps de séchage, qui peut alors être couramment inférieur à 60 secondes.

Il est important de noter que la vitesse de vaporisation est directement liée à la granulométrie moyenne des particules et que, plus le diamètre moyen est faible, plus réduit sera le parcours qui permettra aux molécules d'eau de sortir de leur matrice solide, et plus la diffusion de l'eau hors de la particule est grande, meilleur est le rendement de l'évaporation.

La troisième étape du procédé suivant l'invention, réalisée dans le compartiment (3), lequel peut être un réacteur séparé, est une zone de traitement à température variable, suivant le produit final souhaité (19) : cette température peut varier dans une large gamme, telle que 200 à 800°C. et atteindre ainsi les températures classiques de pyrolyse; suivant les produits traités, en fait un maximum de 650°C suffirait dans la majorité des traitements à effectuer, grâce à la présente invention, du fait que l'on se trouve sous vide. Le réchauffage complémentaire (17) nécessaire est assuré par l'extérieur par un système à induction électromagnétique par exemple, ou par tout autre système type cannes chauffantes. L'objectif est de pouvoir réaliser une pyrolyse totale ou partielle des produits à traiter, pouvant conduire utilement à une séparation de certains métaux présents, par vaporisation/condensation sous vide, ou sublimation, ou à une retransformation de produits tel que la transformation en chaux des boues de décarbonatation pour leur réutilisation ultérieure, transformation possible une nouvelle fois grâce à la mise sous vide qui permet de descendre la température de réaction chimique.

La pyrolyse à haute température et sous faible pression d'oxygène, permet une séparation rapide par distillation de vapeur condensable issue de la décomposition des matériaux organiques. Les réactions secondaires d'oxydation qui caractérisent la pyrolyse sont minimisées dans la présente invention; et les condensats obtenus composés de fragments primaires sont de meilleure qualité. On peut maîtriser, grâce au choix du couple température et pression de pyrolyse et au débit de matière qui peut être avantageusement modulé en fonction du profil et de la vitesse de rotation des vis de malaxage (5) (7), les matériaux que l'on veut maintenir dans le produit résiduel (19) et sélectionner ceux que l'on veut au contraire sublimer ou décomposer, puisque chacun a une température propre.

La quatrième étape du procédé selon l'invention, est réalisée dans un compartiment (4) qui est essentiellement une zone de refroidissement et de dégazage final qui peut être également raccordée à une installation de mise sous vide (14), qui peut être la même que celle du compartiment précédent (3).

La cinquième étape du procédé suivant l'invention est réalisée dans un compartiment (5) qui est une zone de traitement ultime permettant, par ajout éventuel d'additifs solides et/ou liquides (16), de réaliser le produit fini désiré en l'enrichissant par exemple, tel que pour les sols à usage agricole, leur enrichissement en azote, en phosphate et en potassium, nutri-éléments, oligo-éléments, etc..., ou en les neutralisant par correction acido-basique du pH par exemple, la correction de la conductivité ou celle de la capacité d'échange anionique.

Ces additifs (16) sont délivrés à partir de tout moyen de stockage tampon (23) fermé par une écluse (10) de dosage et d'étanchéité avec l'atmosphère et alimentant de la quantité voulue, ledit compartiment (5). L'évacuation des produits terminaux (19) résiduels vers tout système d'évacuation est réalisé par tout moyen étanche (24), tel qu'une écluse rotative.

Les différentes zones et compartiments du réacteur (20) sont donc reliés à différents moyens de dégazage et de mise sous vide, de préférence par l'intermédiaire d'un ou plusieurs condenseurs et d'une ou plusieurs pompes à anneaux liquides. Les condenseurs pourront permettre également l'injection d'une ou plusieurs substances bactéricides, fongicides, algicides, etc..., ou neutralisants, suivant la température adoptée dans le procédé et le type de produits à traiter (6) introduits afin d'éliminer toute toxicité des gaz produits récupérés. Chaque compartiment du réacteur (20) est équipé de capteurs (18) de pression de température et/ou d'humidité interne, afin de transmettre l'ensemble des valeurs de pression de température et humidité, vers un ordinateur central qui est programmé pour piloter tous les moyens de fonctionnement dudit réacteur (25) suivant le procédé de la présente invention, pour un traitement défini par rapport aux produits sortant désirés (19), en fonction de la composition des produits à traiter entrants (6).

Un réacteur (20) tel que décrit ci-dessus et dont les compartiments mis sous vide correspondent aux étapes suivant le procédé de la présente invention, peut être fractionné également en plusieurs réacteurs successifs correspondant à la combinaison d'un ou plusieurs desdits compartiments, et disposés toujours en continu mais avec des systèmes d'entraînement qui peuvent être alors différents. Certains de ces compartiments peuvent même être mis non pas sous vide mais à la pression ambiante ou même en surpression, de même que l'ensemble du réacteur dans sa réalisation telle que représentée sur la figure jointe, mais alors dans un objectif diffèrent de traitement de produits pollués.

## Revendications

1. Procédé de réhabilitation de matières et sols pollués en continu par pyrolyse sous atmosphère contrôlée, comprenant au moins une première étape (1) de malaxage de ceux-ci avec des additifs (9) dont au moins de la chaux, une deuxième étape (2) de séchage du mélange, une troisième étape (3) de décomposition des produits de ce mélange par chauffage (17) à haute température et une quatrième étape (4, 5) de traitement complémentaire en fonction de la nature des produits à traiter initiaux et du produit fini (19) désiré, caractérisé en ce que :
- on réalise l'ensemble des étapes du procédé dans au moins un réacteur (20) comportant au moins deux axes de malaxage (7) corotatifs, formant vis d'Archimède et enfermés dans une enceinte (25) dont les caractéristiques techniques permettent d'atteindre les températures nécessaires à la pyrolyse. ;
- on rajoute, lors de la première étape (1) de malaxage initial des produits à traiter (6), des additifs (9) comprenant, outre de la chaux vive, des oxydes métalliques de telle façon que l'on réalise des complexes moléculaires capteurs de cations métalliques et qui jouent le rôle d'agents de séquestration.Les réactifs permettent également l'oxydation des métaux lourds sous forme de sulfures, polysulfures, oxydes et hydroxydes stables et insolubles en phase aqueuse. Le produit final ayant un pH basique renforce l'insolubilisation des oxydes et hydroxydes métalliques ;
- on utilise l'énergie de réaction du mélange obtenu dans la première étape (1) avec les produits à traiter (6) broyés ou pâteux et les additifs (9), et celle mécanique de frottement des vis de malaxage (7) pour sécher, dans la deuxième étape (2), ledit mélange;
- on effectue la troisième étape (3) de décomposition des produits par pyrolyse avec un chauffage (17) portant la température du compartiment correspondant, entre 200 et 800°C;
- on effectue l'ensemble des étapes (1, 2, 3, 4, 5...) du traitement, sous vide, entre 10 000 et 50 000 Pa de pression absolue ;

2. Procédé de réhabilitation de matières et sols pollués en continu selon la revendication 1, caractérisé en ce que l'on utilise un réacteur (20) composé d'une seule enceinte (25) et divisé en autant de compartiments successifs (1, 2, 3, 4, 5...) que d'étapes de procédé, disposés en continu les uns derrière les autres dans l'ordre de celles-ci et traversés par les mêmes axes de malaxage (7).

3. Procédé de réhabilitation de matières et sols pollués en continu selon l'une quelconque des revendications 1 à 2, caractérisé en ce que l'on broie lesdits produits à traiter (6) avant leur introduction dans ledit réacteur (20) par tout moyen connu leur donnant une dimension de granulométrie égale au maximum à la hauteur de filet des vis de malaxage (7) à l'entrée du réacteur (20).

4. Procédé de réhabilitation de matières et sols pollués en continu selon l'une quelconque des revendications 1 à 3 caractérisé en ce qu'on chauffe le mélange obtenu dans la deuxième étape de séchage (2) par un apport énergétique extérieur (8) si les produits à traiter ont un taux humidité supérieur à 30% environ, afin d'aider leur séchage.

5. Procédé de réhabilitation de matières et sols pollués en selon l'une quelconque des revendications 1 à 4, caractérisé en ce que lors de la troisième étape (3) de pyrolyse, d'une part on décompose les composés organiques sous forme de gaz, et d'huile pyrolytique condensable et que d'autre part on sublime d'autres composés non pyrolysables qui s'évaporent sous vide, l'ensemble des gaz étant récupérés par au moins le moyen (13) de mise sous vide et à partirduquel on peut effectuer si nécessaire les séparations indispensables à la récupération de chaque gaz en vue de son utilisation spécifique, et à la fin de cette étape de pyrolyse (3), on obtient un résidu solide que l'on refroidit lors d'une quatrième étape (4) au cours de laquelle se termine la réaction qui a démarré dans l'étape précédente (3).

6. Procédé de réhabilitation de matières et sols pollués en continu selon l'une quelconque des revendications 1 à 5, caractérisé en ce qu'on effectue une dernière étape de traitement (5) au cours de laquelle on rajoute aux produits résiduels issus de l'étape précédente (3, 4) des additifs (16) déterminés en fonction du produit fini désiré (19) et de la nature des composés de produits à traiter initiaux (6).

7. Procédé de réhabilitation de matières et sols pollués en continu selon l'une quelconque des revendications 1 à 6, caractérisé en ce qu'il peut constituer une station mobile de traitement et être utilisé in-situ.

8. Dispositif de réhabilitation de matières et sols par pyrolyse de produits à traiter (6) broyés ou pâteux suivant un procédé comprenant au moins une première étape (1) de malaxage de ceux-ci avec les additifs (9) dont au moins de la chaux, une deuxième étape (2) de séchage du mélange, une troisième étape (3) de décomposition des produits de ce mélange par chauffage (17) à haute température et une quatrième étape (4, 5) de traitement complémentaire en fonction de la nature des produits à traiter initiaux et du produit fini (19) désiré, caractérisé en ce qu'il comprend :
- au moins un réacteur (20) comportant au moins deux axes de malaxage corotatifs formant vis (7) d'Archimède et enfermés dans une enceinte étanche (25), et divisé en autant de compartiments successifs (1, 2, 3, 4, 5...) que d'étapes du procédé de traitement, disposés en continu les uns derrière les autres dans l'ordre desdites étapes et traversés par lesdites vis (7) lequels compartiments pouvant être reliés ou séparés et ainsi pouvant comporter une partie constituée par une mono-vis mais reliée par tout dispositif étanche connu tel par exemple qu'une écluse rotative ;
- au moins une introduction étanche (21) des produits à traiter (6) et des additifs (9) dans le premier compartiment (1) ;
- des moyens (11, 12, 13, 14, 15...) de mise sous vide de chacun des compartiments du ou des réacteurs (20) ;
- au moins un moyen de chauffage (17) du troisième compartiment de pyrolyse (3).

9. Dispositif de réhabilitation de matières et sols pollués en continu selon la revendicationt 8, caractérisé en ce qu'il comprend en amont dudit réacteur (20) un moyen connu qui broie lesdits produits à traiter (6) avant leur introduction dans ledit moyen (21) d'alimentation desdits réacteurs (20) et leur donnant une dimension de granulométrie égale au maximum à la hauteur de filet desdites vis de malaxage (7) 30 dans le premier compartiment (1).

10. Dispositif de réhabilitation de matières et sols pollués en continu selon l'une quelconque des revendications 8 à 9, caractérisé en ce que le profil et le pas des filets desdites vis de malaxage (7) sont différents dans chaque compartiment du réacteur (20), et que dans le premier compartiment (1) de malaxage, son profil et son pas de filet sont déterminés pour cisailler les produits à traiter (6) en particules de moins de un dixième de millimètre.

11. Dispositif de réhabilitation de matières et sols pollués en continu selon l'une quelconque des revendications 8 à 10, caractérisé en ce qu'il comporte un moyen de chauffage (8) du compartiment (2) qui permet le chauffage dudit compartiment quand le taux d'humidité des produits à traiter introduits (6) est supérieur à 30% environ.

12. Dispositif de réhabilitation de matières et sols pollués en continu selon l'une quelconque des revendications 8 à 11, caractérisé en ce qu'il comporte un dernier compartiment (5) et un moyen étanche (10, 23) d'introduction d'additifs (16) dans ledit compartiment (5), lesquels additifs (16) étant déterminés en fonction du produit final désiré (19) et la nature des composés des produits à traiter initiaux (6).

13. Dispositif de réhabilitation de matières et sols pollués en continu selon l'une quelconque des revendications 8 à 12, caractérisé en ce qu'il comporte au moins des capteurs (18) de pression de température et/ou de taux d'humidité intérieur dans chaque compartiment du réacteur (20) et un ordinateur de contrôle relié aux divers capteurs et qui est programmé pour piloter tous les moyens de fonctionnement dudit réacteur (20) suivant le procédé de traitement de l'une quelconque des revendications 1 à 6 défini par rapport au produit désiré (19) en fonction de la composition des produits à traiter rentrant (6).

14. Dispositif de réhabilitation de matières et sols pollués en continu selon l'une quelconque des revendications 8 à 13, caractérisé en ce que les moyens d'entraînement et de mise sous vide (13, 14) sont reliés à une installation de condensation et de séparation des gaz de décomposition, de sublimation et d'évaporation desdits compartiments correspondants (3, 4) aux fins d'utilisation ou de traitement ultérieur.

15. Dispositif de réhabilitation de matières et sols pollués en continu selon l'une quelconque des revendications 8 à 14, caractérisé en ce qu'il peut constituer une station mobile de traitement et être utilisé in-situ.
